# EUROPEAN PATENT APPLICATION

(11) **EP 1 170 524 A1**
(43) Date of publication of application: **09.01.2002**
(21) Application number: 00202380.2
(22) Date of filing: 07.07.2000
(51) Int. Cl.: F16F 15/00

(54) **Piezoelectric device for reducing the vibrations of a structural element**

(71) Applicant: ABB Research Ltd., 8050 Zürich (CH)
(72) Inventor: Bertolotto Bianc, Giuseppe, 10020 Lauriano (TO) (IT); Mandurino, Pietro, 40141 Bologna (IT)
(74) Representative: Giavarini, Francesco

(57) **Abstract**

A piezoelectric device for reducing the vibrations induced in a first structural element by first mechanical waves acting thereon, characterized in that it comprises:
- first piezoelectric means which are operatively coupled to the first structural element so as to deform and produce an electrical signal in response to its vibrations;
- second piezoelectric means operatively coupled to a second structural element; and
- conducting means for electrically coupling said first piezoelectric means to said second piezoelectric means; the second piezoelectric means receiving said electric signal and deforming so as to determine a vibration of the second structural element and the consequent production of second mechanical waves which oppose said first mechanical waves.

## Description

The present invention relates to a piezoelectric device for reducing the vibrations induced in a structural element by mechanical waves acting thereon.

It is known in the art that in several technical fields, many structural elements, such as parts of rotating machines, fans, electrical transformers, aircraft, skis et cetera, during their service experience undesirable vibrations; in fact, vibrations may affect performances, they can cause technical problems and misfunctioning, and even lead to fatigue damages.

In the prior art, many different solutions have been developed in order to dampen the vibrations and reduce their negative effects on structures. These solutions are mainly based on two different techniques, and in particular, a first technique which uses passive control systems while the second one makes use of active control systems.

Generally, passive control systems use energy-absorbing materials, such as viscoelastic materials or mechanical dampers, which are fixed to a structural element and are able to absorb the mechanical energy of its vibrations and to dissipate it into heat.

These systems, although they are quite satisfying in applications, still present some drawbacks. In particular, mechanical dampers are effective only for reducing vibrations at specific frequencies which must be selected at the designing stage; viscoelastic materials, on the other hand, are suitably used for broader ranges of frequencies, but under a certain level of frequency they lose their effectiveness. Furthermore, they suffer from environmental conditions and are not suitable for being used in presence of aggressive agents, at high temperature et cetera.

In addition, both solutions are expensive and waste completely the mechanical energy of vibrations.

Some passive control systems are realized by using piezoelectric materials that convert the mechanical energy of vibrations into electrical energy; this energy is then provided to a suitable electric or electronic control circuit which is devised to dissipate it. In this case, the control circuit must be adjustable in order to dampen a wide spectrum of frequencies; as a consequence, it may be structurally complex and economically expensive, and depending on the applications, it may require the use of cumbersome and heavy components.

Active control systems use sensor devices which, following the vibrations of the structural element to which they are operatively coupled, provide suitable signals to a control unit; in turn, the control unit sends a command signal to actuator devices which operate in such a way to oppose the deformation of the structural element and to reduce or to oppose its vibrations.

One of the main disadvantages of known active control systems resides in the fact that they require a control unit which is sophisticated, per se expensive, and need a dedicated and additional source of power, in addition to the amount of energy provided by piezoelectric materials if they are used as sensors. Furthermore, when piezoelectric materials are used as actuators, according to well-known solutions, it is necessary to use very expensive voltage amplifiers.

Finally, these devices are significantly effective only with low-frequency vibrations.

The aim of the present invention is to provide a device for reducing the vibrations of a structural element which allows to overcome the drawbacks and disadvantages of the prior art, and in particular, which can exploit, at least partially or even totally and in an active way, the mechanical energy of the vibrations for reducing the vibrations themselves, without requiring any additional power feeding.

Within the scope of this aim, an object of the present invention is to provide a device for reducing the vibrations of a structural element which can be effectively used either at low or high frequency vibrations, without requiring significant designing modifications.

Another object of the present invention is to provide a device for reducing the vibrations of a structural element which is suitable for being used also with aggressive environmental conditions.

A further object of the present invention is to provide a device for reducing the vibrations of a structural element which has a simplified structure in comparison with prior art devices, and allows to avoid the use of cumbersome, expensive and heavy components.

Another object of the present invention is to provide a device for reducing the vibrations of a structural element which is highly reliable, relatively easy to manufacture and at competitive costs.

This aim, these objects and others which will become apparent hereinafter are achieved by a piezoelectric device for reducing the vibrations induced in a first structural element by first mechanical waves acting thereon, characterized in that it comprises:
- first piezoelectric means which are operatively coupled to the first structural element so as to deform and produce an electrical signal in response to its vibrations;
- second piezoelectric means operatively coupled to a second structural element; and
- conducting means for electrically coupling said first piezoelectric means to said second piezoelectric means; the second piezoelectric means receiving said electric signal and deforming so as to determine a vibration of the second structural element and the consequent production of second mechanical waves which oppose said first mechanical waves

The piezoelectric device according to the invention allows to reduce the vibrations of the structural element by exploiting the mechanical energy of the vibrations themselves, without requiring any additional power supplying and according to a solution which is functionally effective and constructively simple.

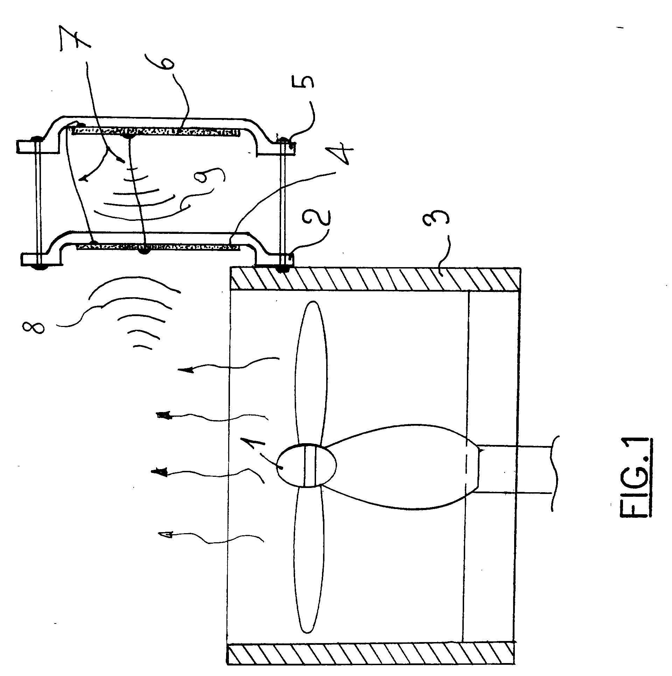

Further characteristics and advantages of the present invention will become apparent from the following description of preferred but not exclusive embodiments of the piezoelectric device, illustrated only by way of non-limitative example with the accompanying drawing of Figure 1 which schematically illustrates the application of the device according to the invention to a fan.

The piezoelectric device according to the invention comprises first piezoelectric means which are operatively coupled to a first structural element so as to deform and produce an electrical signal in response to its vibrations. In particular, the first structural element can be constituted by any part of a structural body which can deform and vibrate; for example, it can be constituted by the casing of a rotating machine, such as an electric motor or a power generator, by the tank of a power and/or distribution transformer, by the frame of a fan or of a turbine, by the casing of a washing machine, et cetera.

Advantageously, the piezoelectric device according to the invention comprises second piezoelectric means which are operatively coupled to a second structural element; in particular, according to applications and/or to specific needs the first structural element and the second structural element can be constituted by two different portions of a same body, or they can belong to two structurally independent bodies.

Furthermore, the device is provided with conducting means which electrically couple the first piezoelectric means to the second piezoelectric means.

In this way, in the presence of mechanical waves which act on the first structural element and cause its vibrations, the first piezoelectric means deform and produce an electrical signal, usually a peak of voltage; this electric signal is supplied, by means of said conducting means, to the second piezoelectric means which, in turn, deform so as to determine a vibration of the second structural element and the consequent production of further mechanical waves. These further mechanical waves are suitable for opposing and dampening the mechanical waves acting on the first element for a wide range of frequencies, either at high or low frequency levels, depending on the applications.

At the same time, it is also possible to arrange the second piezoelectric means, the second structural element and their coupling so as to produce, for specific and selected frequencies, mechanical waves which are in counterphase with those acting on the first structural element.

A further significant advantage of the piezoelectric device according to the invention resides in the fact that the conducting means are realized by a substantially passive electric circuit, i.e. a circuit which does not include any active component that requires power supplying. As a result, the device can be completely self-supplied with the energy provided by the mechanical waves acting on the first element.

In particular, according to a preferred embodiment and with a solution which is functionally effective, structurally simple and economically inexpensive, the passive electric circuit can be constituted by a couple of electrical wires whose ends are fixed to the first piezoelectric means and to the second piezoelectric means. Alternatively, the electric circuit can be provided with some passive components, such as capacitors, which can be used, for example, for storing a certain amount of energy and lighting a LED.

As regards to the first and second piezoelectric means, they both can comprise one or more layers of piezoelectric material which are fixed to the corresponding structural element; fixing can be realized by any suitable technique, for example by gluing with adhesive materials, such as epoxy resins.

Depending on the applications, said one or more layers of piezoelectric material can comprise a ceramic piezoelectric material, such as a barium or a lead zirconate titanate (PZT) piezoelectric compound, or an inorganic crystal piezoelectric material, such as quartz and barium titanate, or an organic polymer piezoelectric material, such as polyvinylidene fluoride (PVDF) and its copolymers, polyvinyl fluoride or polyvinyl chloride, which exhibit piezoelectric properties when properly treated. For example, organic polymer piezoelectric materials, thanks to the fact that they can be easily formed into thin films, may be advantageously used when the device must have a structural flexibility.

In particular, in order to maximize the amount of energy which can be extracted from the mechanical waves and transformed into electrical energy, the first piezoelectric means comprise a piezoelectric material at high energy gain, i.e. a PZT material.

According to various and extremely flexible solutions, the layers of piezoelectric material can be fixed to the corresponding structural element in many different configurations; for example, it is possible to use only one layer of material which is associated to a portion of the structural element, or a plurality of pieces which are placed side by side or are arranged in a patch configuration, or a plurality of layers which are positioned in a stack configuration. These configurations can be also realized on different surfaces of the structural elements; for example, in case of thin structural elements, such as a thin metallic wall, it is possible to provide two layers of piezoelectric material each of which is fixed to a corresponding face of the metallic wall with the wall interposed therebetween.

Furthermore, some layers of different piezoelectric materials can be simultaneously or interchangeably used.

An example of a possible application of the piezoelectric device of the present invention to a fan 1 is schematically shown in Figure 1. In this case, the first structural element is constituted by a metallic panel 2, which is operatively connected to the housing 3 of the fan 1 in correspondence of the outlet section of the air flow; alternatively, the first structural element can be realized by means of a sleeve which is connected to the housing 3. A layer 4 of PZT material is glued to the panel 2 on at least a part of one of its surfaces; the layer 4 is preferably formed by some piezoelectric patches, or alternatively, a PVDF membrane can be used. In its turn, the second structural element is constituted by a second metallic panel 5, which is positioned at a certain distance from the panel 2, and is provided with a layer 6 of PZT material glued thereon. Also in this case, the layer 6 can be preferably formed by some piezoelectric patches or,
alternatively, by a single PVDF membrane.

A couple of conducting wires 7 connect electrically the layer 4 with the layer 6.

In practice, during their functioning, the fan 1 and/or its housing 3 vibrate and cause mechanical waves 8 which act on the panel 2 and determine its vibration; as a consequence, the panel 2 deforms and determines the deformation of the piezoelectric layer 4 associated thereto. In this way, the piezoelectric layer 4 produces an electric signal which, by means of the wires 7, is supplied to the piezoelectric layer 6. In turn, the layer 6 deforms and causes the vibration of the panel 5 and the consequent production of mechanical waves 9 which oppose the waves 8, thus allowing to reduce the vibrations induced in the panel 2.

In practice it has been observed that the device according to the invention fully achieves the intended aim and objects, since it allows to reduce the effect of the vibration with a solution which is effective, simple, inexpensive, flexible, and independent from the environmental conditions.

The piezoelectric device thus conceived is susceptible of numerous modifications and variations, all of which are within the scope of the inventive concept; all the details may also be replaced with other technically equivalent elements.

In practice, the materials employed, so long as they are compatible with the specific use, as well as the dimensions, may be any according to requirements and to the state of the art.

## Claims

1. Piezoelectric device for reducing the vibrations induced in a first structural element by first mechanical waves acting thereon, **characterized in that** it comprises:
- first piezoelectric means which are operatively coupled to the first structural element so as to deform and produce an electrical signal in response to its vibrations;
- second piezoelectric means operatively coupled to a second structural element; and
- conducting means for electrically coupling said first piezoelectric means to said second piezoelectric means; the second piezoelectric means receiving said electric signal and deforming so as to determine a vibration of the second structural element and the consequent production of second mechanical waves which oppose said first mechanical waves.

2. Piezoelectric device according to claim 1 **characterized in that** said second mechanical waves are suitable for damping said first mechanical waves.

3. Piezoelectric device according to claim 1 or 2 **characterized in that** said second mechanical waves are in counterphase with said first mechanical waves.

4. Piezoelectric device according to one or more of the preceding claims **characterized in that** it is self-supplied with the energy provided by said first mechanical waves.

5. Piezoelectric device according to one or more of the preceding claims **characterized in that** said conducting means comprise a substantially passive electric circuit.

6. Piezoelectric device according to one or more of the preceding claims **characterized in that** said passive electric circuit comprises two electrical wires whose ends are fixed to the first piezoelectric means and to the second piezoelectric means.

7. Piezoelectric device according to one or more of the preceding claims **characterized in that** said first piezoelectric means comprise at least one layer of piezoelectric material fixed to the first structural element.

8. Piezoelectric device according to one or more of the preceding claims **characterized in that** said second piezoelectric means comprise at least one layer of piezoelectric material fixed to the second structural element.

9. Piezoelectric device according to claims 7 and 8 **characterized in that** said at least one layer of piezoelectric material comprises a ceramic piezoelectric material.

10. Piezoelectric device according to claims 7 and 8 **characterized in that** said at least one layer of piezoelectric material comprises an inorganic crystal piezoelectric material.

11. Piezoelectric device according to claims 7 and 8 **characterized in that** said at least one layer of piezoelectric material comprises an organic polymer piezoelectric material.

12. Piezoelectric device according to claim 7 **characterized in that** said first piezoelectric means comprises a piezoelectric material at high energy gain.
